# EUROPEAN PATENT SPECIFICATION

(11) **EP 3 191 351 B1**
(45) Date of publication and mention of the grant of the patent: **26.09.2018**
(21) Application number: 15781467.4
(22) Date of filing: 08.09.2015
(51) Int. Cl.: B60S 1/08, B60Q 1/38

(54) **A WIPER OPERATION SPEED ADJUSTMENT SYSTEM**
WISCHERBETRIEBSGESCHWINDIGKEITSVERSTELLSYSTEM
SYSTÈME DE RÉGLAGE DE VITESSE DE FONCTIONNEMENT D'ESSUIE-GLACE

(30) Priority: 08.09.2014 TR 201410504
(43) Date of publication of application: 19.07.2017
(73) Proprietor: Tofas Turk Otomobil Fabrikasi Anonim Sirketi, Bursa (TR)
(72) Inventor: CINAR, Emrah, 16639 Osmangazi Bursa (TR)
(74) Representative: Dericioglu Kurt, Ekin
(86) International application number: PCT/TR2015/050095
(87) International publication number: WO 2016/039709

(56) References cited:
- EP-A2- 1 614 594
- WO-A1-2013/010989
- DE-A1- 4 341 844
- US-A1- 2009 003 006

## Description

### Field of the Invention

The present invention relates to a wiper operation speed adjustment system which enables to regulate operation speed of the wiper according to the movement of the vehicle in rainy weather conditions.

### Background of the Invention

When the driver is overtaking another vehicle in rainy weather conditions, the water cloud (spray cloud) from the wheels of the vehicle s/he overtakes reduces sight of the driver. Even if the wipers of the vehicle are working during this period, operation speed of the wipers is only sufficient for clearing the water accumulating on the windshield of the vehicle in case of normal rain/snow. The said water cloud coming from the tire of the overtaken vehicle causes accumulation of extra water on the windshield and if the driver does not increase the speed of the wipers manually, it will jeopardize drive safety in cases of demanding situations such as overtaking.

The Korean patent document no. KR100727353, an application in the state of the art, discloses a wiper device for sensing rain. The device is provided to secure the sight of a driver under the low speed wiper operation when converting an automatic mode to a manual mode. The device comprises a rain sensor, a wiper/washer operator, a wiper motor, an interface part, and a checking part. The wiper operator selects an automatic mode or a manual mode for sensing rain and controls an operation speed of a wiper on the manual mode. The wiper motor operates the wiper by a voltage signal inputted. The interface part provides an operation signal to the wiper operator or provides an operation control signal to the rain sensor. The checking part checks the signal detected by the rain sensor and drives the wiper motor.
Chinese patent document no. CN103171520, an application known in the art, discloses a windscreen wiper. The wiper system comprises a humidity sensor, an electromotor, a controller, a storage battery, and a windscreen wiper. The humidity sensor and the electromotor are connected to the controller. Signals are transmitted by the humidity sensor to the controller; the controller controls the electromotor to rotate. The output shaft of the electromotor is connected with the windscreen wiper to drive the windscreen wiper to move. The speed of the windscreen wiper can be adjusted according to rainfall.
Korean patent document no. KR20000034500, an application in the state of the art, discloses a control device of the driving speed of a vehicle wiper. The device includes a rainfall sensing unit, an electric generator and a control unit. The rainfall sensing unit is in the form of a mill and the rotational speed of the impellers of the mill changes depending on the amount of the rainwater falling on the impellers. The amount of the electricity generated in an electric generator depends on the rotational speed of the impellers. The control unit controls the speed of wipers depending on the amount of the electricity.
In addition to these, patent and utility model documents no. CN202421067, JPH1068709, KR20100025200, US2011138567, US4584508, KR20090020913, US6094981, and WO9625311 disclose rainfall sensing systems developed for automatic operation of the wipers in the vehicles.

EP-A-1614594 shows a similar wiper operation speed adjustment system.

### Summary of the Invention

The objective of the present invention is to provide a wiper operation speed adjustment system comprising a module increasing the speed of the wipers when the right-left turn signal is active.

Another objective of the present invention is to provide a wiper operation speed adjustment system which enables to increase the wiper operation speed at any defined vehicle speed when the wiper speed is not zero and one of right-left turn signals is turned on.

A further objective of the present invention is to provide a wiper operation speed adjustment system which enables the wiper speed to automatically increase when the vehicle gives a turn signal in rainy weather conditions.

### Detailed Description of the Invention

"A wiper operation speed adjustment system" developed to fulfill the objective of the present invention is illustrated in the accompanying figure, in which:

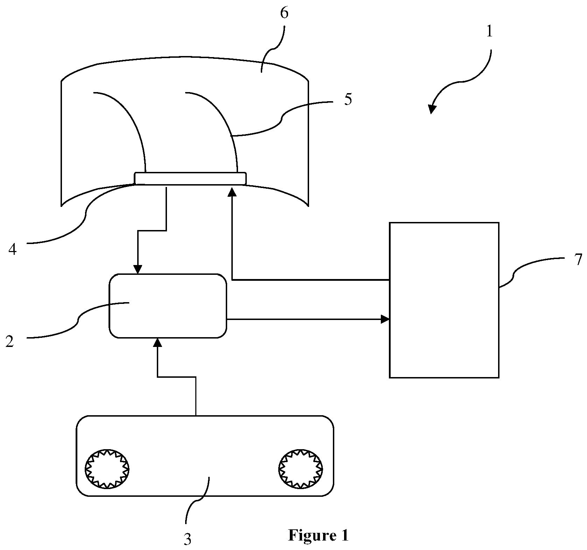

Figure 1 is a schematic view of the wiper operation speed adjustment system of the present invention.

The components given in the figures are assigned reference numbers as follows:
1. Wiper operation speed adjustment system
2. Vehicle computer
3. Turn signal
4. Wiper motor
5. Wiper
6. Windshield
7. Module

The wiper operation speed adjustment system (1) of the present invention enables to eliminate the water accumulation produced by the water cloud, which rises from the wheels of the other vehicles that the vehicle passes by in cases of movements such as overtaking in rainy weather conditions, on the windshield (6) by gradually increasing the wiper speed, and comprises
- at least one vehicle computer (2) which collects data from the right and left turn signals (3) and the wipers (5) of the vehicle about their operation states,
- at least one wiper motor (4) which enables to move the wipers (5) to clean the windshield (6),
- at least one control module (7), which detects that the vehicle changes direction and the wipers (5) are operating at normal speed according to the data received from the vehicle computer (2), and enables to gradually increase the operation speed of the vehicle wipers (5) and to completely remove the water on the windshield (6) that hinders sight of the driver.

The wiper operation speed adjustment system (1) of the present invention instantly reads the wiper (5) speed and the vehicle's right-left turn signal (3) integrations via the vehicle computer (2). When the wiper (5) speed is not zero, in other words, when the wipers (5) are turned on by the user due to rain/snow, the wiper (5) speed is gradually increased depending on the direction of the vehicle. The direction of the vehicle is directly received from the right-left turn signals (3) and when any of these signals are open, it is detected that the vehicle will change direction.

In a rainy/snowy weather, the rain/snow which accumulates on the windshield (6) of the vehicle that moves on a certain direction and hinders sight of the driver can be eliminated by wipers (5) at a normal operation speed. However, in cases where the vehicle changes direction or passes by other vehicles such as when overtaking, the water cloud (spray cloud) from the wheels of the said vehicles causes an extra accumulation on the windshield (6) of the vehicle. This accumulation cannot be sufficiently cleared at the normal operation speed of a wiper (5). This situation jeopardizes drive safety in a process such as overtaking which requires attention of the driver.

The wiper operation speed adjustment system (1) of the present invention comprises a module (7) that increases speed of the wipers (5) when the right-left turn signal (3) is active. The said module (7) increases the wiper (5) operation speed at any defined vehicle speed when the wiper (5) speed is not zero and one of right-left turn signals (3) is turned on.

Thanks to the fact that the speed of the wipers (5) can be changed in line with the information received directly from the vehicle computer (2), speed of the wipers (5) will be automatically increased when the vehicle starts to the overtake in a rainy/snowy weather condition independent of whether there is a rain sensor in the vehicle, and the wipers (5) will return to their previous speed when the turn signal (3) is turned off after the overtaking process is finished. Due to the fact that the speed of the wipers (5) increases when overtaking, the water cloud (spray cloud) rising from the wheels of the overtaken vehicle will not be able to reduce sight of the driver. Thanks to the fact that no reduction occurs in the sight of the driver, risk is eliminated and drive safety is ensured.

The wiper operation speed adjustment system (1) of the present invention starts to operate provided that the driver manually starts the wipers (5) in case of rain/snow. When the system (1), which detects that the wipers (5) are operating at normal speed, also detects that the right or left turn signal (3) is turned on, it increases the speed of the wipers (5) which are currently operating. As the system (1) can be activated when the driver turns on the wipers (5) manually, automatic operation of the wipers (5) by the help of a sensor detecting rainfall can also activate the system (1). Thus, the system (1) can be activated both by the driver or a rain detection system.

In another embodiment of the invention, the rain amount/intensity acting on the windshield (6) can be detected by a sensor and when the intensity increases and sight decreases, a signal is sent to the wiper motor (4) by the control module (7) to increase the wiper (5) speed.

## Claims

1. A wiper operation speed adjustment system (1); which enables to eliminate the water accumulation produced by the water cloud, which rises from the wheels of the other vehicles that the vehicle passes by in cases of movements such as overtaking in rainy weather conditions, on the windshield (6) by gradually increasing the wiper speed; **comprising**
- at least one wiper motor (4) which enables to move the wipers (5) to clean the windshield (6), and **characterized by**
- at least one vehicle computer (2) which collects data from the right and left turn signals (3) and the wipers (5) of the vehicle about their operation states,
- at least one control module (7), which detects that the vehicle changes direction and the wipers (5) are operating at normal speed according to the data received from the vehicle computer (2), and enables to gradually increase the operation speed of the vehicle wipers (5) and to completely remove the water on the windshield (6) that hinders sight of the driver.

2. A wiper operation speed adjustment system (1) according to Claim 1, **characterized by** the control module (7), which, in accordance with the data received directly from the vehicle computer (2), increases the speed of the wipers (5) to a certain extent as long as a turn signal (3) is turned on, and which reduces the speed of the wipers (5) to the original speed when the turn signal (3) is turned off.

3. A wiper operation speed adjustment system (1) according to Claim 1 or Claim 2, **characterized by** the control module (7), which is activated when the driver annually operates the wipers (5) in case of rain/snow, and which, upon detecting that the right or left turn signal (3) is turned on, sends signal to the wiper motor (4) to increase the speed of the wipers (5).

4. A wiper operation speed adjustment system (1) according to Claim 1 or 2, **characterized by** the control module (7), which, in case of rain/snow, sends a signal to the wiper motor (4) to operate the wipers (5) at normal speed via a sensor detecting rain/snow.

5. A wiper operation speed adjustment system (1) according to any one of the preceding claims, **characterized by** the control module (7), which sends a signal to the wiper motor (4) to increase the speed of the wipers (5) when intensity increases or sight decreases via a sensor that detects amount/intensity of the rain acting on the windshield (6).

## Patentansprüche

1. Geschwindigkeitseinstellung-System (1) für Scheibenwischer; wodurch die auf der Windschutzscheibe (6) durch Wasserwolke produzierte Wasseransammlung durch allmähliches Erhöhen der Scheibenwischer-Geschwindigkeit eliminiert ist, wobei die Wasserwolke sich in Fällen von Bewegungen wie Überholen bei Regenwetterbedingungen von den Rädern der anderen Fahrzeuge erhebt, an denen das Fahrzeug vorbeifährt; **umfassend**
- mindestens einen Wischermotor (4), der es ermöglicht, die Scheibenwischer (5) zu bewegen, um die Windschutzscheibe (6) zu reinigen, und **gekennzeichnet durch**
- mindestens einen Fahrzeugrechner (2), der vom rechten und linken Blinker (3) und von den Scheibenwischern (5) des Fahrzeugs Daten über ihre Betriebszustände empfängt,
- mindestens ein Steuermodul (7), das erfasst, dass das Fahrzeug die Richtung ändert und die Scheibenwischer (5) mit normaler Geschwindigkeit gemäß den Daten arbeiten, die von dem Fahrzeugrechner (2) empfangen sind, und das ermöglicht, die Betriebsgeschwindigkeit der Scheibenwischer (5) allmählich zu erhöhen und das Wasser auf der Windschutzscheibe (6) vollständig zu entfernen, das den Anblick des Fahrers hindert.

2. Geschwindigkeitseinstellung-System (1) für Scheibenwischer nach Anspruch 1, **gekennzeichnet durch** ein Steuermodul (7), das in Übereinstimmung mit den Daten, die direkt von dem Fahrzeugrechner (2) empfangen sind, die Geschwindigkeit der Scheibenwischer (5) bis zu einem bestimmten Ausmaß erhöht, solange ein Blinker (3) eingeschaltet ist, und welche die Geschwindigkeit der Scheibenwischer (5) auf die ursprüngliche Geschwindigkeit reduziert, wenn der Blinker (3) ausgeschaltet ist.

3. Geschwindigkeitseinstellung-System (1) für Scheibenwischer nach Anspruch 1 oder 2, **gekennzeichnet durch** ein Steuermodul (7), das betätigt ist, wenn der Fahrer bei Regen / Schnee jährlich die Scheibenwischer (5) betätigt und das beim Erfassen, dass der rechte oder linke Blinker (3) eingeschaltet ist, ein Signal an den Wischermotor (4) sendet, um die Geschwindigkeit der Scheibenwischer (5) zu erhöhen.

4. Geschwindigkeitseinstellung-System (1) für Scheibenwischer nach Anspruch 1 oder 2, **gekennzeichnet durch** ein Steuermodul (7), das im Falle von Regen / Schnee ein Signal an den Wischermotor (4) sendet, um die Scheibenwischer (5) mit normaler Geschwindigkeit über einen Sensor zu betätigen, der Regen / Schnee erfasst.

5. Geschwindigkeitseinstellung-System (1) für Scheibenwischer nach einem der vorangehenden Ansprüche, **gekennzeichnet durch** ein Steuermodul (7), das über einen Sensor, der die Menge / Intensität des auf die Windschutzscheibe (6) einwirkenden Regens erfasst, ein Signal an den Wischermotor (4) sendet, wenn die Intensität zunimmt oder die Sicht abnimmt, um die Geschwindigkeit der Scheibenwischer (5) zu erhöhen.

## Revendications

1. Système de réglage de vitesse d'opération d'essuie-glace (1); qui permet d'éliminer l'accumulation d'eau produite par le nuage d'eau, qui s'élève des roues des autres véhicules que le véhicule parcourt en cas de mouvements tels que des dépassements par temps de pluie, sur le pare-brise (6) en augmentant progressivement la vitesse d'essuie-glace; **comprenant**
- au moins un moteur d'essuie-glace (4) qui permet de déplacer les essuie-glaces (5) pour nettoyer le pare-brise (6), et **caractérisé par**
- au moins un ordinateur de véhicule (2) qui recueille des données à partir des signaux de rotation droite et gauche (3) et des essuie-glaces (5) du véhicule à propos de leurs états de fonctionnement,
- au moins un module de commande (7), qui détecte que le véhicule change de direction et que les essuie-glaces (5) fonctionnent à vitesse normale en fonction des données reçues de l'ordinateur du véhicule (2), et permet d'augmenter progressivement la vitesse de fonctionnement des essuie-glaces (5) du véhicule et de supprimer complètement l'eau sur le pare-brise (6) qui empêche la visibilité du conducteur.

2. Système de réglage de vitesse de fonctionnement d'essuie-glace (1) selon la revendication 1, **caractérisé par** un module de commande (7) qui, en fonction des données reçues directement de l'ordinateur du véhicule (2), augmente dans une certaine mesure la vitesse des essuie-glaces (5) tant qu'un signal de virage (3) est activé, et qui réduit la vitesse des essuie-glaces (5) à la vitesse d'origine lorsque le signal de virage (3) est désactivé.

3. Système de réglage de vitesse de fonctionnement d'essuie-glace (1) selon la revendication 1 et la revendication 2, **caractérisé par** un module de commande (7) qui est activée lorsque le conducteur actionne chaque année les essuie-glaces (5) en cas de pluie / neige et qui, en détectant que le clignotant droit ou gauche (3) est activé, envoie un signal au moteur d'essuie-glace (4) pour augmenter la vitesse des essuie-glaces (5).

4. Système de réglage de vitesse de fonctionnement d'essuie-glace (1) selon la revendication 1 et la revendication 2, **caractérisé par** un module de commande (7) qui, en cas de pluie / neige, envoie un signal au moteur d'essuie-glace (4) pour actionner les essuie-glaces (5) à vitesse normale via un capteur détectant la pluie / la neige.

5. Système de réglage de vitesse de fonctionnement d'essuie-glace (1) selon la revendication 1 et la revendication 2, **caractérisé par** un module de commande (7) qui envoie un signal au moteur d'essuie-glace (4) pour augmenter la vitesse des essuie-glaces (5) lorsque l'intensité augmente ou que la vue diminue via un capteur qui détecte la quantité / intensité de la pluie agissant sur le pare-brise (6).
